# EUROPÄISCHE PATENTANMELDUNG

(11) **EP 1 722 323 A1**
(43) Veröffentlichungstag der Anmeldung: **15.11.2006**
(21) Anmeldenummer: 06113647.9
(22) Anmeldetag: 08.05.2006
(51) Int. Cl.: G06Q 10/00

(54) **Computerunterstütztes Verfahren zum Bereitstellen von Bauteilen für Aufzüge, Fahrsteige und Fahrtreppen sowie entsprechende Liefereinheiten**

(30) Priorität: 13.05.2005 EP 05104053
(71) Anmelder: INVENTIO AG, 6052 Hergiswil (CH)
(72) Erfinder: Cruz, Pablo, 50014, Zaragoza (ES)
(74) Vertreter: Gaussmann, Andreas

(57) **Zusammenfassung**

Liefereinheit und entsprechendes computergestütztes Verfahren zum Bereitstellen von Bauteilen (11 bis 19) eines Aufzugs (10), eines Fahrsteigs oder einer Fahrtreppe. Dabei werden die folgenden Schritte ausgeführt:
- Bereitstellen einer Teileliste (21),
- Bereitstellen von zugehöriger Montageinformation (22),
- Abpacken der Bauteile (11 bis 19), wobei die Bauteile (11 bis 19) unter Berücksichtigung der Montageinformation mit Packmaterial zu Liefereinheiten (U) abgepackt werden.

## Beschreibung

Die Erfindung betrifft ein computerunterstütztes Verfahren zum Bereitstellen von Bauteilen für Aufzüge, Fahrsteige und Fahrtreppen nach Anspruch 1 und Liefereinheiten nach Anspruch 13.

Es gibt verschiedenste Abläufe, die beim Herstellen, Montieren, Verpacken und Ausliefern von Systemen oder Systemkomponenten zu Einsatz kommen. Besonders bei komplizierteren Systemen, wie zum Beispiel Aufzügen, Fahrtreppen oder Fahrsteigen, die für den Material- oder Personentransport ausgelegt sind, sind die Anforderungen an die Qualifikation des Personals besonders hoch, da einerseits die Systeme in sich recht komplex sind, andererseits aber auch besonders hohe Ansprüche gelten was die Sicherheit des Personals bei der Montage, aber auch beim zu erstellenden/zu montierenden System gelten.
Dies kann besonders problematisch sein, wenn die Montage durch wenig geschultes Personal oder unter widrigen äusseren Umständen vorgenommen werden muss.

Ausserdem wird auch der Druck immer grösser solche Anlagen möglichst schnell und kostengünstig bereitstellen und montieren zu können.

Im Bereiche der allgemeinen Prozesssteuerung sind Methoden bekannt welche einen kundenorientierten Zusammenbau von Baugruppen ermöglichen. US2004/0176867 zeigt beispielsweise eine Methode bei der Kundenspezifische, für einen Auftrag benötigte, Teile bestellt, an eine Sammelstelle angeliefert und von dort, zusammen mit erforderlichen Zusammenbauinstruktionen an ein Komplettierungswerk gesandt werden. Im Komplettierungswerk werden die einzelnen Teile nun komplettiert (zusammengestellt) und als Gesamtpaket dem Kunden abgeliefert. Nachteilig ist hierbei, dass sämtliche zu einem Auftrag verbundenen Teile miteinander zum Komplettierungswerk angeliefert werden und die Mitarbeiter des Komplettierungswerkes aufgrund der Zusammenbauinstruktionen selbst die beispielsweise zu einer Unterbaugruppe gehörenden Teile sortieren und in die richtige Montagereihenfolge bringen müssen. Dies ist Zeitaufwändig.

Aufgabe der Erfindung ist es deshalb, ein computergestütztes Verfahren zur Verbesserung der Logistik im Zusammenhang mit der Erstellung von mechanischen Fördersystemen vorzuschlagen, mit welchem die oben beschriebenen Nachteile vermieden werden, und das nicht nur die Auslieferung vom Hersteller bzw. Lieferanten sondern auch die Anlieferung beim Kunden vereinfacht und das eine Basis für eine rationelle und sichere Montage bildet; und
eine Liefereinheit mit Bauteilen für ein Fördersystem, das eine Bezeichnung aufweist, zu schaffen, welches für die Durchführung des erwähnten Verfahrens geeignet ist.

Die Lösung dieser Aufgabe erfolgt erfindungsgemäss
- für das Verfahren durch die Merkmale des unabhängigen Anspruchs 1; und
- für die Liefereinheit durch die Merkmale des unabhängigen Anspruchs 13.

Bevorzugte Weiterbildungen der Erfindung werden durch die jeweiligen abhängigen Ansprüche umschrieben.

Unter dem Begriff Fördersystem sollen im Rahmen der vorliegenden Beschreibung insbesondere Aufzüge für Waren und/oder Personen sowie Fahrtreppen und Fahrsteige verstanden werden. Unter dem Begriff "Liefereinheit" sollen einzelne oder mehrere in einem Gebinde oder Paket enthaltene Bauteile eines Fördersystems, einschliesslich eventuellen Packmaterials, verstanden werden, wobei eine solche Liefereinheit nicht identisch sein soll mit buchhalterisch abgegrenzten Liefereinheiten.
Das Fördersystem besteht aus vielen einzelnen Bauteilen oder Baugruppen. Die für ein Fördersystem benötigten Bauteile oder Baugruppen sind in einer Teileliste erfasst. Die Teileliste ist demzufolge in der Regel eine Liste der Bauteile bzw. Baugruppen und deren erforderliche Anzahl um einen Aufzug oder eine Aufzugsanlage, bzw. ein Fördersystem zusammenzustellen.

Das Fördersystem ist in ein Gebäude integriert. Das Fördersystem wird in einzelnen Bauteilen oder Baugruppen zum Gebäude angeliefert und dort zum Fördersystem zusammengebaut. Das Gebäude ist entsprechend der Installationsort an welchem das Fördersystem endgültig zusammengebaut wird. Der Installationsort weist verschiedene Montagesektoren auf. Ein Montagesektor ist ein Teilbereich des Installationsortes. Ein Installationsort weist mehrere Montagesektoren auf. So bildet beispielsweise jede Etage eines Aufzuges einen Montagesektor oder ein Boden eines Aufzugsschachtes, eine Decke des Aufzugsschachtes oder ein Steuerungsraum, usw. kann einen eigenen Montagesektor bilden.
Die Montage des Fördersystems beinhaltete mehrere einzelne Montageschritte. Ein Montageschritt stellt eine einzelne Montagetätigkeit innerhalb des gesamten Montageablaufes dar.

Die Bauteile für ein Fördersystem werden entweder gesamthaft bei einem Hersteller gefertigt, oder es werden einzelne Bauteile oder vormontierte Baugruppen bei verschiedenen Herstellern gefertigt. Auch die Lieferung an den Verbraucher bzw. zum Installationsort kann in verschiedener Weise geschehen:
entweder liefert jeder Hersteller seine Bauteile oder Baugruppen direkt an die Baustelle, oder die Bauteile und Baugruppen werden bei einem Haupthersteller gesammelt und, ggfs. nach Teilmontagen, von dort an den Verbraucher bzw. zum Installationsort geliefert. Jedenfalls werden die Bauteile als erstes konsolidiert, das heisst nach dem Herstellen unter Verwendung der Teileliste identifiziert und bereitgestellt. Dies beinhaltet beispielsweise eine Prüfung der Verfügbarkeit eines Bauteiles, eine provisorische oder definitive Reservation des Bauteiles ein Abrufen des Bauteiles, oder eine Zusammenstellung mehrerer Bauteile zu Montagegerechten Baugruppen. Die Teileliste stellt sicher und dient der Kontrolle, dass sämtliche erforderliche Bauteile, in der bestimmungsgemässen Anzahl vorhanden sind.

Anschliessend werden die Bauteile entsprechend ihrer späteren örtlichen und/oder zeitlichen Verwendung unter Berücksichtigung von Montageinformationen zu Liefergruppen zusammengestellt und unter Verwendung von spezifischem Packmaterial zu Liefereinheiten abgepackt. Eine Liefereinheit kann ein einzelnes Montagepaket enthalten, und in diesem Falle bildet das Packmaterial der Liefereinheit gleichzeitig das Packmaterial des Montagepaketes. Eine Liefereinheit kann auch mehr als ein Montagepaket enthalten, und in diesem Falle kann für das Abpacken der Montagepakete zusätzliches, gewissermassen inneres, Packmaterial verwendet werden. Ein Montagepaket enthält Bauteile oder Baugruppen, welche vorzugsweise in der Montageabfolge zusammengehören. Beim Abpacken werden die Bauteile von steifen oder flexiblem, flächigem, bei Bedarf auch besonders gut schützendem, Packmaterial teilweise oder vollständig umhüllt und/oder durch entsprechendes längliches Packmaterial zusammengehalten und/oder in geeignete Behälter wie Schachteln, Container und ähnliches abgefüllt. Dabei entstehen aus den Bauteilen die Liefereinheiten.

Das Zuordnen (Zusammenstellen) und Abpacken der mittels der Teileliste identifizierten Bauteile erfolgt hierbei unter Berücksichtigung der vorgegebenen Montageinformation, das heisst nach bestimmten Montagekriterien. Dadurch werden die Anlieferung am richtigen Installationsort und im richtigen Montagesektor gewährleistet und spätere interne Transporte am Installationsort vermieden, und Montageschritte an und für sich werden vereinfacht. Die Montageinformation wird je nach Auftrag bereitgestellt und kann manuell oder mittels eines Computers erstellt und bereitgestellt werden. Die Montageinformation berücksichtigt eine Ausführungsart des Fördersystems sowie lokale Begebenheiten des Installationsortes, wie beispielsweise Anzahl und Zugänglichkeit von Etagen, Montageräume, Baufortschritt, etc. Vorzugsweise wird die Montageinformation von einem Computer bereitgestellt nach dem dieser einen Auftragseingang zu verzeichnen hat. Im Auftragseingang sind typischerweise alle Angaben enthalten, die notwendig sind, um die notwendigen Bauteile zu identifizieren und Aussagen über deren Montage und die Montageschritte bereitstellen zu können. Der Auftragseingang enthält die erforderlichen Kundeninformationen welche vom Verkäufer aufgrund der Kunden- oder Architektenanforderungen erfasst werden. Die Montageinformationen sind in ihrem Grundgerüst vom Aufzugsbauer vorgegeben und werden dem Auftragseingang und / oder dem Baufortschritt entsprechend adaptiert.

Die Montageinformation umfasst Information über Montagesektoren, an welche die Liefereinheiten und ggfs. die Montagepakete zu transportieren sind und wo sie zur späteren Montage erforderlich sind, und/oder über Montageschritte, die innerhalb eines bestimmten Montagesektors in bestimmter zeitlicher Reihenfolge durchzuführen sind, ggfs. unter Berücksichtigung der Montageschritte bzw. des Montagezustandes in anderen Montagesektoren des Installationsortes.

Die Montageinformation wird vorzugsweise unter Berücksichtigung der Gegebenheiten im Gebäude, in dem der Aufzug, der Fahrsteig oder die Fahrtreppe zu erstellen ist, oder am Installationsort erstellt und bereitgestellt. Die Montageinformation berücksichtigt vorzugsweise ebenfalls die Anzahl der Aufzüge die in einem Gebäude oder einem Gebäudeteil zu installieren sind.

Unter Berücksichtigung der Montageinformation werden sodann für jede Liefereinheit eine Montagesektor-Kennung und/oder eine Montageschritt-Kennung erstellt.

Jede Sektor-Kennung enthält Information über den jeweiligen Montagesektor an einem Installationsort, zu dem die Liefereinheit transportiert werden soll. Die Sektor-Kennung ermöglicht es dem zuständigen Personal, an einem Installationsort, zum Beispiel an einer Baustelle, jede Liefereinheit dem richtigen Montagesektor zuzustellen.

Jede Montageschritt-Kennung enthält Information über eine Reihenfolge der Montageschritte. Die Montageschritt-Kennung erleichtert es dem zuständigen Personal, die Montageschritte am Installationsort bzw. im Montagesektor schrittweise im korrekten Ablauf auszuführen.

Jede Liefereinheit wird mit der bzw. den ihr zugehörenden Kennungen versehen, wobei grosse und/oder schwere Liefereinheiten auch an mehreren Stellen mit Kennungen versehen werden können. Die Kennungen werden üblicherweise auf oder an dem Packmaterial angebracht, sie können aber, wenn die Bauteile nur zu einer gebindeartigen Liefereinheit gebündelt oder ggfs. in einem offenen Container enthalten sind, auch auf einem der Bauteile selbst angebracht werden. Beim Anbringen der Kennungen kann bei Bedarf auch Information herkömmlicher Art angegeben werden, zum Beispiel über eine einzuhaltende Position der Liefereinheit bzw. eines Montagepaketes, wie 'oben' oder 'unten', Gewichtsangaben, sowie Verbote, eine Liefereinheit oder ein Montagepaket unterhalb eines schweren anderen Gegenstandes oder ausserhalb eines bestimmten Temperatur- oder Feuchtigkeitsbereiches oder im Bereich hoher Feldstärken zu lagern.

Die erwähnten Kennungen können in, jedem Fachmann verständlichen, Buchstaben- und Zahlenkombinationen oder kryptisch, oder in Piktogrammen oder Strichcodes angegeben sein. Die Kennungen müssen selbstverständlich erfassbar bzw. lesbar sein, und zwar im Hinblick auf ihre spätere Verwendung vorzugsweise auch oder nur maschinenlesbar. Es können auch RF-Tags als Kennung verwendet werden.

Nach Erstellung der Kennungen werden diese manuell oder maschinell auf den Liefereinheiten angebracht, und zwar entweder an oder auf deren Packmaterial oder auf den Bauteilen selbst, wenn Teile derselben offen sichtbar sind.

Enthält eine Liefereinheit mehrere Montagepakete, so können auch Kennungen, im Allgemeinen Montageschritt-Kennungen, für die einzelnen Montagepakete erstellt und direkt auf oder an diesen angebracht werden.

Die fertigen und mit den Kennungen versehenen Liefereinheiten werden hierauf vom Hersteller bzw. von den Herstellern ausgeliefert und an den Installationsort transportiert. Sie können auch abgeholt statt ausgeliefert werden.

Am Installationsort werden die Liefereinheiten auf die verschiedenen Montagesektoren verteilt. Dies ist besonders einfach, wenn die Liefereinheiten Sektor-Kennungen aufweisen. Weisen die Liefereinheiten nur Montageschritt-Kennungen auf, so sind entweder spezifische Fachkenntnisse des Personals und/oder separate Zusatzangaben, zum Beispiel auf einer Tabelle, erforderlich, um die Liefereinheiten den richtigen Montagesektoren zuzuführen. Sind die Liefereinheiten auf Grund von Sektor-Kennungen in den richtigen Montagesektoren angelangt und weisen sie keine Montageschritt-Kennungen auf, so muss der Ablauf der Montage mit Hilfe von spezifischen Fachkenntnissen und/oder mit Hilfe zusätzlicher Angaben erfolgen. Die Durchführung des neuen Verfahrens ist offensichtlich besonders einfach, wenn die Liefereinheiten sowohl Sektor-Kennungen als auch Montageschritt-Kennungen aufweisen.

Vorzugsweise wird das neue Verfahren auch auf die Verarbeitung einer eingehenden Bestellung ausgedehnt. Hierzu wird vor der Konsolidierung der Bauteile der Eingang einer Bestellung für einen Aufzug über einen elektronische Schnittstelle eines Rechners empfangen, wobei der Bestellungseingang Information umfasst, die es dem Rechner erlaubt, zu ermitteln, welcher Aufzugstyp bestellt worden, und auszuliefern ist.

Vorzugsweise umfasst das neue Verfahren einen Verfahrensschritt, in welchem computergestützt eine Liste der Bauteile eines auszuliefernden Systems bereitgestellt wird, und/oder einen Verfahrensschritt, in welchem diese Liste angezeigt wird, zum Beispiel auf einem Monitor eines Computers und/oder in einem Ausdruck.

Ein internes Transportsystem kann in das Verfahren einbezogen werden, mit welchem die einzelnen Bauteile aus ihren Lagerstationen zu einer Vormontage- oder Versandstation gebracht werden.

Die Kennungen können in verschiedener Weise erstellt werden, aber es ist besonders vorteilhaft und empfiehlt sich zur Vermeidung oder Reduktion der Möglichkeit von menschlichen Fehlern, die Kennungen computergestützt zu erstellen.

Zur Vereinfachung der Montage können gewisse Bauteile, im Rahmen der Konsolidierung, durch eine Vormontage beim Hersteller bzw. bei einem der Hersteller zu Baugruppen vereinigt, das heisst vormontiert, werden. Hierzu kann vor dem Abpacken Information benutzt und vorzugsweise abgerufen werden, die eine optimierte Vormontage mindestens eines Teils der Bauteile zu mindestens einer Baugruppe betreffen, und diese Baugruppe montiert werden. Beim Abpacken werden dann nicht nur die einzelnen Bauteile sondern auch die zu Baugruppen vormontierten Bauteile abgepackt.

Es erweist sich als zeitsparend, wenn nach dem Eingang oder der Bearbeitung einer Bestellung mit Hilfe eines Rechners überprüft wird, ob alle Bauteile vorhanden, kurzfristig herstellbar oder sofort bei Unterlieferanten abrufbar sind. Diese Schritte werden als Teil der als Konsolidierung bezeichneten Arbeitsschritte angesehen. Auf diese Weise können die Abläufe der Lagerhaltung der Bauteile und das Konsolidieren der Bauteile ab Bestellungseingang verknüpft werden.

Um Beschädigungen und Verluste von einzelnen oder zu Baugruppen vormontierten Bauteilen am Installationsort bzw. in den Montagesektoren zu vermeiden, ist es vorteilhaft, die Bauteile erst nach dem Eintreffen in den Montagesektoren und unter Berücksichtigung ihrer Montageschritt-Kennungen unmittelbar vor ihrer Verwendung aus dem Packmaterial zu entnehmen.

Die Kennungen sollten vorzugsweise so ausgestaltet sein, dass sie sowohl unmittelbar durch eine Person als auch, mit Hilfe eines Lesegerätes, maschinenlesbar bzw. maschinell erfassbar sind.

Weitere Einzelheiten und Vorteile der Erfindung werden im Folgenden beispielhaft und mit Bezug auf die Zeichnung beschrieben. Es zeigen:
- Fig. 1: ein montiertes Fördersystem in Form eines Aufzugs, in einer vereinfachten Ansicht;
- Fig. 2: das Prinzip der Erfindung, schematisch dargestellt;
- Fig. 3: Bauteile für das in Fig. 1 dargestellte Fördersystem, wobei jeweils eines oder mehrere Bauteile in einer Liefereinheit enthalten sind, in einer vereinfachten Ansicht;
- Fig. 4: ein Beispiel für die auf einer Liefereinheit anzubringende Kennungen, in einer Ansicht; und
- Fig. 5A, 5B: den Ablauf eines Verfahrens nach der Erfindung, in einem Diagramm.

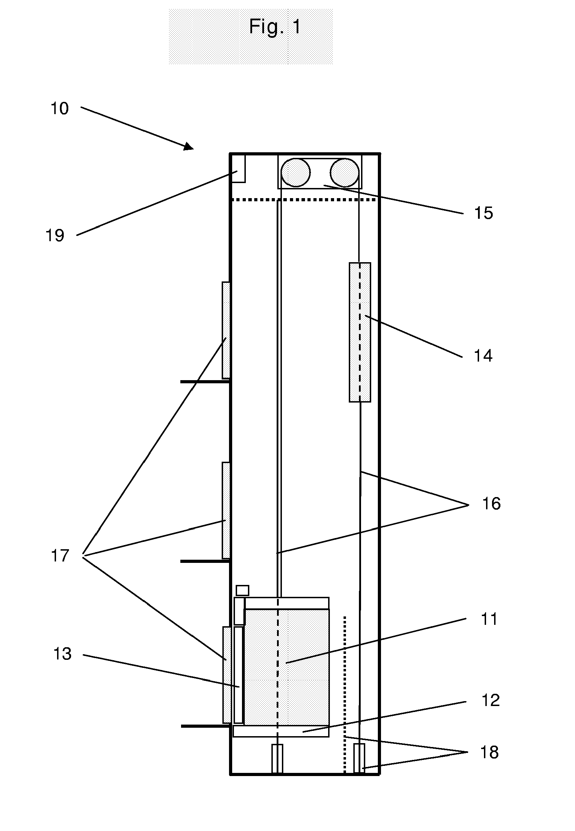

In Fig. 1 ist als Fördersystem 10 ein Aufzug dargestellt, der im Wesentlichen Folgendes aufweist: eine Aufzugskabine 11 mit einem Boden, der einen Lastenträger 12 bildet, ein Kabinentürsystem 13, ein Gegengewicht 14, ein Antriebssystem 15, Führungsschienen 16 für die Aufzugskabine 11 bzw. das Gegengewicht 14, Schachttüren 17, ein Steuerungssystem 19, Schachtmaterial 18. Fig. 1 zeigt anschaulich, dass die Gesamtmontage des Fördersystems 10 erheblich komplizierter ist als die Montage einer Maschine, insbesondere, weil die einzelnen Bauteile in verschiedenen Montagesektoren bzw. auf verschiedenen Etagen benötigt werden, wobei entweder noch keine Aufzugsanlage zum Transportieren der Bauteile auf die entsprechenden Etagen vorhanden ist oder die einzelnen Bauteile zu voluminös sind für eine solche Aufzugsanlage. Die Gesamtmontage wird weiter dadurch kompliziert, dass im Interesse von kurzer Montagezeit vielfach mehrere Aufzüge eines Gebäudes gleichzeitig montiert werden, und dass einerseits aus funktionalen Gründen und anderseits aus Sicherheitsgründen einzelne Montageschritte in einer genauen zeitlichen Abfolge durchgeführt werden müssen.

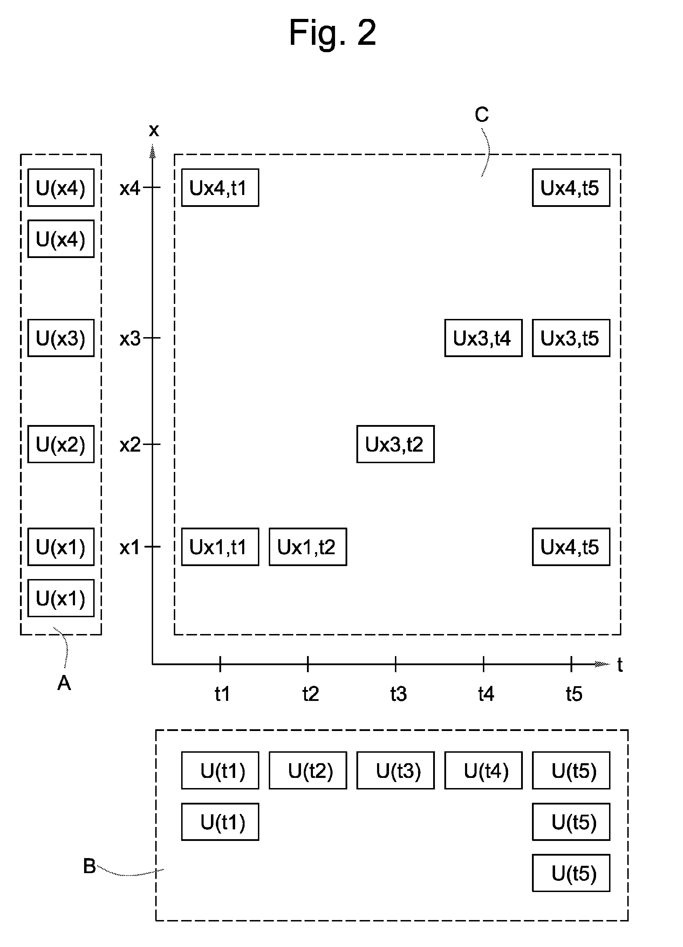

Fig. 2 veranschaulicht den Grundgedanken und drei Varianten A, B, C der Erfindung.

In Fig. 2 ist in vertikaler Richtung eine örtliche Achse x angegeben. Die örtliche Achse x ist nicht als massstabsgetreue Längenangabe zu verstehen. Bei Aufzügen kann die örtliche Achse x im Wesentlichen der tatsächlichen Vertikalachse eines Bauwerkes entsprechen. Bei schrägen oder horizontalen Transportmitteln oder bei der Verwendung mehrerer im gleichen Gebäudeteil angeordneter Aufzüge entspricht die örtliche Achse x dagegen im Allgemeinen einem im Umfeld einer bestimmten Stelle liegenden Montagesektor, wobei im vorliegenden Beispiel vier Montagesektoren x1, x2, x3 und x4 angegeben sind. Jedem Montagesektor x1, x2, x3 x4 sind eine oder mehrere Liefereinheiten U zugeordnet. Die Liefereinheiten U sind indexiert mit den Bezeichnungen der jeweiligen Montagesektoren, zu denen sie zu transportieren sind. Die Bauteile der Liefereinheiten Ux1 bis Ux4 werden bei der Montage in den Montagesektoren x1 bis x4 benötigt.

In Fig. 2 ist ferner in horizontaler Richtung eine zeitliche Achse t angegeben, auf welcher der Ablauf der Montageschritte ersichtlich ist. Die zeitliche Achse t bzw. die längs ihr dargestellten Montageschritte sind nicht massstäblich aufzufassen. Im vorliegenden Beispiel sind fünf Montageschritte t1, t2, t3, t4, t5 gezeigt, und es sind für jeden Montageschritt eine oder mehrere Liefereinheiten U vorgesehen. Die Liefereinheiten U sind indexiert mit den Bezeichnungen der jeweiligen Montageschritte, für deren Ausführung sie bestimmt sind. Zur Durchführung des Montageschrittes t1 werden die Bauteile der Liefereinheiten Ut1 benutzt, und entsprechend werden zur Durchführung der Montageschritte t2 bis t5 die Bauteile der Transporteinheiten Ut2 bis Ut5 benötigt.

Bei der Durchführung des neuen Verfahrens sind, wie oben erwähnt, die drei Varianten A, B und C möglich.

In der Variante A weisen die Liefereinheiten U Sektor-Kennungen K(x) auf, wodurch es möglich ist, jede Liefereinheit U zum richtigen Montagesektor zu transportieren. Zur Ausführung der Montageschritte ist Fachwissen und/oder zusätzliche Montageinformation, ggfs. in Kombination mit den Sektor-Kennungen K(x) erforderlich.

In der Variante B weisen die Liefereinheiten U nur Montageschritt-Kennungen K(t) auf, wodurch es möglich ist, die Bauteile nach Massgabe jeweiliger Montageschritte aus den Liefereinheiten U zu entnehmen. Für die Zustellung der Liefereinheiten U zu den richtigen Montagesektoren ist Fachwissen und/oder zusätzliche Montageinformation, ggfs. in Kombination mit den Montageschritt-Kennungen, erforderlich.

In der Variante C, die als optimal bezeichnet werden kann, weisen die Liefereinheiten U sowohl Sektor-Kennungen K(x) als auch Montageschritt-Kennungen K(t) auf, so dass die Vorteile der Varianten A und B in Kombination genutzt werden. Die Liefereinheiten U für die Variante C sind in Fig. 2 indexiert mit den Bezeichnungen der jeweiligen Montagesektoren bzw. der jeweiligen Montageschritte.
Werden mehrere Aufzüge des Gebäudeteiles im gleichen Zeitabschnitt installiert sind die Kennungen vorzugsweise auf eine Optimierung der Gesamtanlage ausgerichtet. So kann beispielsweise in einem bestimmten Montageabschnitt - welcher mehrere einander folgende Montageschritte beinhalten kann - Gegengewichte 14 mehrerer Aufzüge montiert werden.

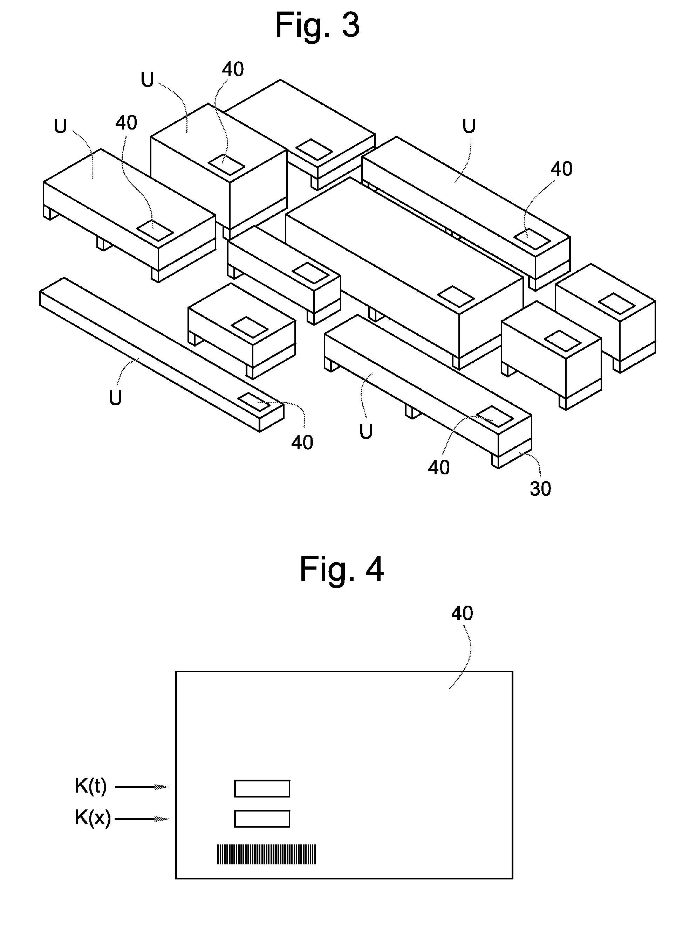

Fig. 3 zeigt die Liefereinheiten U, in denen die Bauteile für das Fördersystem 10, im vorliegenden Fall für den in Fig. 1 dargestellten Aufzug, enthalten sind. Die Bauteile werden, nachdem sie konsolidiert wurden, mit spezifischem geeignetem Packmaterial zu den Liefereinheiten U abgepackt. Die Liefereinheiten U sind im vorliegenden Beispiel, wie dies häufig der Fall ist, auf Paletten 30 angeordnet oder beinhalten die Paletten 30.

Als Packmaterial kommen beispielsweise Papier, Kunststofffolien, Karton, Holz, Styropor in Frage, mit denen die Bauteile ganz oder teilweise umhüllt werden, ferner Bänder, Schnüre, Drähte und Ähnliches, um die Bauteile mit oder ohne hüllendes Packmaterial zusammenzuhalten. Wesentlich ist, dass jede Liefereinheit mit mindestens einer Kennung K(x) und/oder K(t) versehen ist.

Die Liefereinheiten U können auch spezifische Werkzeuge oder Prüfgeräte enthalten, insbesondere Sonderwerkzeuge und - prüfgeräte, die nur für die Montage von in den jeweiligen Liefereinheiten befindlichen Bauteilen benötigt werden.

Fig. 4 zeigt eine Etikette 40, auf der im vorliegenden Beispiel die Kennungen K(x), K(t) angebracht sind. Kennungen K(x) und K(t) können aber auch direkt auf dem Packmaterial oder ggfs. auf den Bauteilen selbst angebracht werden. Die Kennung K(x) und die Kennung k(t) können auf derselben Etikette bzw. in demselben Bezeichnungsfeld eines Packmaterials oder eines Bauteiles angebracht sein, oder es kann für jede Kennung eine separate Etikette bzw. ein separates Bezeichnungsfeld vorgesehen sein. Bei einer gemeinsamen Etikette bzw. einem gemeinsamen Bezeichnungsfeld sind für die Kennungen K(x) und K(t) separate Kennungsfelder vorgesehen.

Die Etiketten bzw. Bezeichnungsfelder können auch Zusatzfelder enthalten, in welchen zusätzliche Angaben angebracht werden können. Im Weiteren können die Etiketten Leerfelder enthalten, die beispielsweise im Zusammenhang mit Kontrollen betreffend Lagerhaltung, Auslieferung oder Buchhaltung benutzt werden können.

Die Kennungen K(x), K(t) können in verschiedenster Weise gestaltet sein. Sie müssen erfassbar bzw. lesbar sein, vorzugsweise auch oder nur maschinenlesbar. Insbesondere kommen in Frage Buchstaben- und Zahlenkombinationen in Klartext oder mit kryptischen Angaben und Abkürzungen, bildliche, vor Allem piktogramm-artige Darstellungen, Strichcodes. Auch der Einbezug von farblich unterschiedlichen Kennungen oder die Verwendung von RF-Tags ist möglich.

Die Kennungen K(x), K(t) können durch Kleben, Schweissen, Drucken oder Einprägen an den Etiketten 40 oder direkt am Packmaterial oder den Bauteilen der Liefereinheiten U angebracht oder aufgebracht werden.

Die Liefereinheit U enthält, wie erwähnt, ein Bauteil 11 bis 19 oder mehrere Bauteile. Ggfs. kann mindestens ein Teil der Bauteile 11 bis 19 zu mindestens einer in der Liefereinheit U enthaltenen Montageeinheit oder einem Montagepaket vorabgepackt sein.

Die auf der Liefereinheit angebrachten Kennungen K(x), K(t) sind lesbar, vorzugsweise maschinenlesbar. Die Kennungen K(x), K(t) sind vorzugsweise so ausgeführt, dass sie sowohl durch eine Person als auch mit einem Lesegerät maschinenlesbar sind.

Besonders vorteilhaft für einen reibungslosen Ablauf der Montage ist es, wenn die Kennungen K(t) eine Referenz zu einer Montageanleitung umfassen, oder wenn durch das Einlesen der Kennungen mittels eines Lesegeräts Information zum anstehenden Montageschritt auf einem Bildschirm oder einem Ausdruck dargestellt wird.

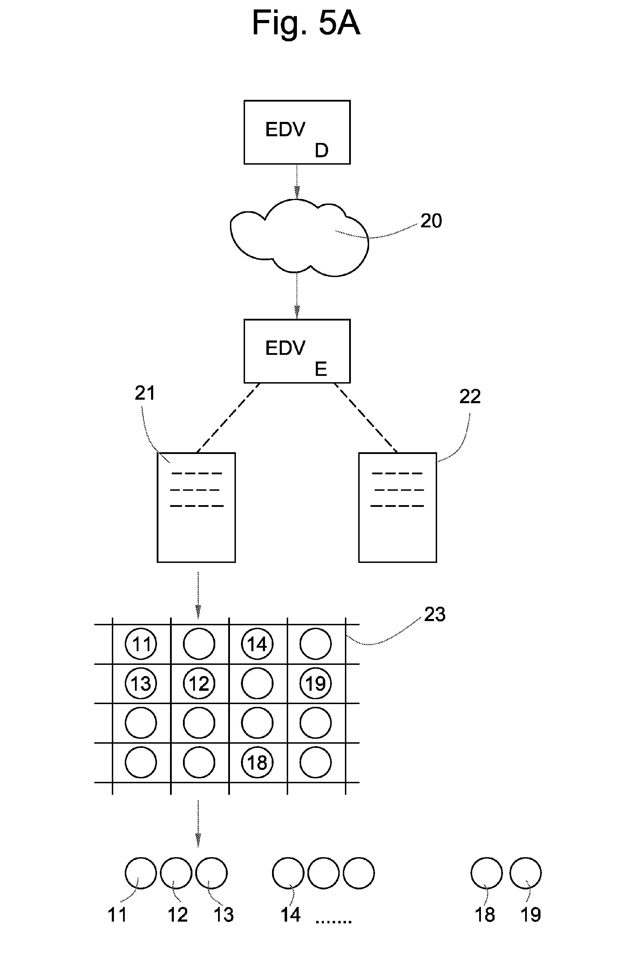

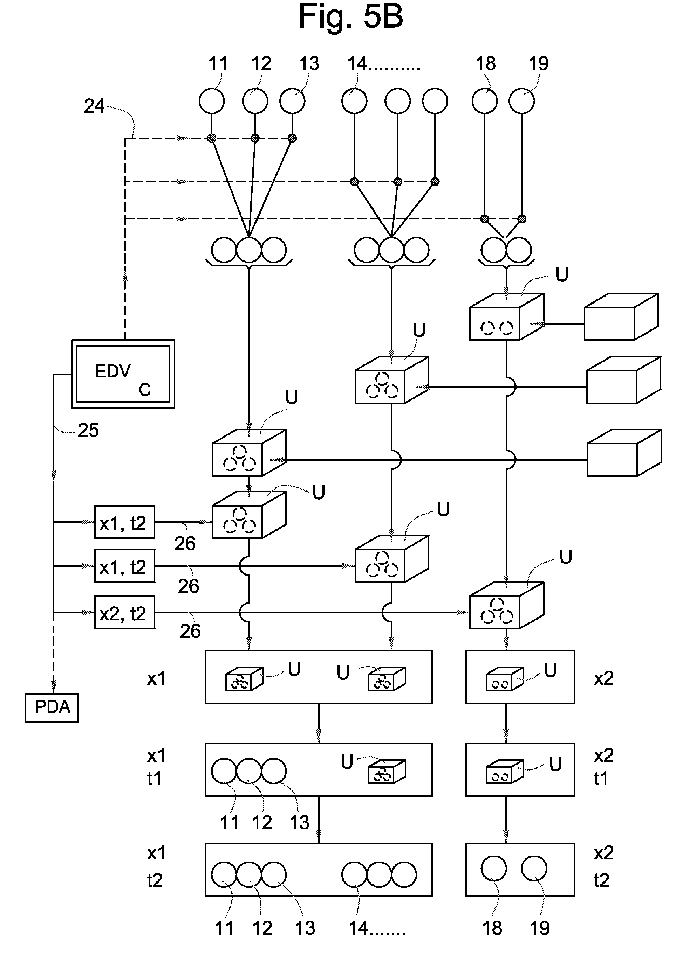

Fig. 5A und 5B zeigen den Ablauf des neuen Verfahrens in einem Diagramm, mit folgenden Schritten:
Mittels eines Computers D wird ein System definiert respektive konfiguriert, das bestellt werden soll. Dieser Schritt ist optional. Er kann zum Beispiel von einem Architekten ausgeführt werden, der ein neues Gebäude plant. Oder es kann sich um einen Um- oder Ausbau eines existierenden Systems handeln. Dieser Kundenwunsch wird im Auftragseingang vom Verkäufer oder vom Kunden direkt festgehalten.

Nachdem dieser Schritt abgeschlossen ist, kann eine Bestellung, zum Beispiel in Form einer standardisierten EDI-Order, oder auf anderem Weg an den Hersteller des Systems übermittelt werden. In Fig. 5A ist ein Beispiel gezeigt, bei dem diese Übermittlung über ein Netzwerk 20 an einen Rechner E erfolgt. Diese Schritte können auch, wie angedeutet, auf konventionellem Wege - zum Beispiel mit Formularen - abgearbeitet werden.

Mittels des Rechners E werden dann eine Teileliste 21 und zugehörige Montageinformation 22 bereitgestellt. Dies geschieht in einem besonders bevorzugten Verfahren dadurch, dass aus dem eingehenden (Auftrag) oder in einem Computer eingegebenen Information alle notwendigen Parameter und andere Angaben extrahiert werden. Anhand dieser Parameter und Angaben wird dann die Teileliste 21 und/oder die Montageinformation 22 ermittelt. Dabei werden neben rein betriebswirtschaftlichen Parametern und Angaben für die Zwecke der Erfindung hauptsächlich technische Grössen verwendet, wie zum Beispiel: Anzahl der Aufzüge eines Gebäudeteiles, Art des Antriebs, Nutzlast, Personenzahl, Nenngeschwindigkeit, Anzahl Halt, Anzahl Zugänge, Lage der Zugänge; Maschinenraum oben, unten oder Maschinenraumlos, Art der Seilführung, Schachtgrundriss und - aufriss, Haltestellendistanz, Kabinentyp, etc. Die Teileliste ist in der Regel eine Liste der Bauteile bzw. Baugruppen und deren erforderliche Anzahl um einen Aufzug oder eine Aufzugsanlage zusammenzustellen. Sie beinhaltet beispielsweise eine Bennennung oder Kennzeichnung der Bauteile, sowie eine Stückliste, die zum Beispiel angibt wie viele 2,5m oder 5m lange Führungsschienen notwendig sind, um nur ein Beispiel zu geben.

Die Montageinformation 22 umfasst Angaben über Montagesektoren x1 bis x4 und/oder Montageschritte t1 bis t5. Vorzugsweise greift der Rechner E auf eine Datenbank und/oder Wissensbasis zu, um diese Angaben bereitstellen und entsprechend adaptieren zu können. Bei Bereitstellen der Montageinformation 22 und der Teileliste 21 werden vorzugsweise Angaben verwendet, die dem Bestellungseingang oder Auftragseingang zu entnehmen sind. Die Datenbank und /oder Wissensbasis enthält beispielsweise ein vom Aufzugsbauer vorgegebenes Grundgerüst, welches entsprechend dem im Auftragseingang dokumentierten Kundenwunsch adaptiert wird.

Es sei angemerkt, dass weder die Teileliste 21 noch die Montageinformation 22 in Papierform vorliegen muss. Es kann sich um andere Arten der Informationswiedergabe oder Informationsbereitstellung handeln.

Die Bestandteile 11 bis 19 des bereitzustellenden Systems werden zuerst konsolidiert. Dieser Schritt ist im unteren Teil der Fig. 5A schematisch angedeutet. Anhand der Teileliste 21 werden die Bauteile identifiziert, die für das System gebraucht werden. Es wird dann geprüft, ob die Bauteile auf Lager sind (das Lager ist in Fig. 5A in Form eines Regallagers 23 angedeutet), oder ob Komponenten von Lieferanten zugeliefert werden. Sobald alle Bauteile vorhanden sind, werden diese bereitgestellt. Dieses Bereitstellen muss nicht bedeuten, dass die Bauteile aus Lager entnommen werden. Es kann sich um eine logische Bereitstellung handeln. In Fig. 5A unten ist dies angedeutet, in dem die Bauteile 11 bis 19 in einer Reihe angeordnet wurden.

Ein Rechner C (er kann mit dem Rechner E identisch oder mit ihm vernetzt sein) stellt Montageinformation bereit. In Fig. 5B ist dies durch den Mehrfachpfeil 24 angedeutet. Die Montageinformation selbst wird als Funktion f der Grössen x1, t1, usw. angegeben.

Gemäss der Montageinformation werden die anhand der Teileliste 21 identifizierten Bauteile 11 bis 19 in Gruppen zusammengestellt, wobei dabei die Montagesektoren und die Montageschritte berücksichtigt werden. Mit diesem Schritt ist die Konsolidierungsphase abgeschlossen.

Anschliessend werden die Gruppen mit geeignetem Packmaterial versehen und es entsteht aus jeder Gruppe eine Liefereinheit U. In Fig. 5B sind diese Liefereinheiten vereinfacht in Form quadratischer Boxen gezeigt.

Ebenfalls mit Information des Rechners C werden dann für jede Liefereinheit eine Sektor-Kennung K(x) und / oder eine Montageschritt-Kennung K(t) generiert oder bereitgestellt. Dieser Vorgang ist in Fig. 5B durch den Pfeil 25 angedeutet.
Diese Kennungen K(x), K(t) werden auf die Liefereinheiten U aufgebracht, wie durch die Pfeile 26 angezeigt.
Die so gekennzeichneten Liefereinheiten U werden nun bereitgestellt. Sie können dann abgeholt, gelagert oder ausgeliefert werden.

Anschliessend oder später werden die so gekennzeichneten Liefereinheiten U an den Installationsort und dort auf Grund der Sektor-Kennungen K(x) in die Montagesektoren X1, x2 gebracht.
Die Bauteile können nach Massgabe der Montageschritt-Kennungen K(t) dem Packmaterial entnommen werden.

Die letzten beiden Schritte sind optional. In Fig. 5B sind sie im unteren Teil der Zeichnung schematisch angedeutet.

In Fig. 5B ist ein weiterer optionaler Schritt angedeutet. Die Montageinformation oder andere Information kann von dem Computer C an das Montagepersonal übermittelt werden. Dies kann zum Beispiel geschehen, in dem die Information auf einen tragbaren Computer (PDA) überspielt wird.

Es liegt auf der Hand, dass das beschriebene Verfahren modifiziert und den jeweiligen Gegebenheiten angepasst werden kann. Je nach Automatisierungsgrad der Abläufe können mehr oder weniger Schritte des Verfahrens computergestützt ablaufen. Es kann ein Computer oder es können eine Anzahl vernetzter Computer eingesetzt werden.

## Patentansprüche

1. Computergestütztes Verfahren zum Bereitstellen von Bauteilen (11 bis 19) eines Aufzugs (10), eines Fahrsteigs oder einer Fahrtreppe, wobei das Verfahren die folgenden Schritte umfasst:
- Bereitstellen einer Teileliste (21), welche Definitionen, der für einen spezifischen Aufzug (10), Fahrsteig oder Fahrtreppe benötigten Bauteile (11 bis 19)und deren Anzahl, enthält
- Bereitstellen von Montageinformation (22), die Angaben über Montagesektoren (x1 bis x4) und/oder Montageschritte (t1 bis t5) dieses Aufzugs (10), Fahrsteigs oder Fahrtreppe umfassen,
- Identifizieren und Bereitstellen der Bauteile (11 bis 19) gemäss der Teileliste (21)
- Zusammenstellen dieser Bauteile (11 bis 19), unter Verwendung der Montageinformation (22) zu Liefergruppen, wobei die Liefergruppen mit Packmaterial zu Liefereinheiten (U) abgepackt werden.

2. Verfahren nach Anspruch 1, **dadurch gekennzeichnet, dass** die Liefereinheiten (U) mit Sektor-Kennungen (K(x)) und oder Montageschritt-Kennungen K(t)), die lesbar, vorzugsweise maschinenlesbar sind, versehen werden, wobei die Kennungen (K(x), K(t)), entsprechend den Montageinformationen (22), Information über
- die jeweiligen Montagesektoren (x1 bis x4) an einem Installationsort, zu dem eine Liefereinheit (U) zu transportieren ist, umfassen, und/oder
- eine Reihenfolge der Montageschritte (t1 bis t5), die es Personal ermöglichen, die Montageschritte (t1 bis t5) am Installationsort schrittweise auszuführen, umfassen.

3. Verfahren nach einem der vorgängigen Ansprüche, **dadurch gekennzeichnet, dass** mindestens ein Teil der bereitzustellenden Bauteile (11 bis 19) unter Verwendung der Teileliste (21) und/oder der Montageinformation (22) konsolidiert werden.

4. Verfahren nach einem der vorgängigen Ansprüche, **dadurch gekennzeichnet, dass**
die Kennungen (K(x), K(t)) mittels eines Computers (C) erstellt oder bearbeitet werden.

5. Verfahren nach einem der vorgängigen Ansprüche, **gekennzeichnet durch** einen oder mehrere der folgenden Schritte:
- manuelles oder maschinelles Aufbringen der Kennungen (K(x), K(t)) an den Liefereinheiten (U),
- Transportieren der Liefereinheiten (U) zum Installationsort,
- Verteilen der Liefereinheiten (U) an die verschiedenen Montagesektoren (x1 bis x4) im Bereich des Installationsorts an Hand der Kennungen (K(x), K(t)).

6. Verfahren nach einem der vorgängigen Ansprüche, **dadurch gekennzeichnet,**
**dass** Sektor-Kennungen (K(x)) vorhanden sind und dass die Liefereinheiten (U) an Hand der Sektor-Kennungen zu den Montagesektoren (x1 bis x4) am Installationsort transportiert werden und dass vorzugsweise die Bauteile (11 bis 19) erst nach dem Eintreffen in den Montagesektoren (x1 bis x4) vor Ort dem Packmaterial entnommen werden.

7. Verfahren nach einem der vorgängigen Ansprüche, **dadurch gekennzeichnet,**
**dass** Montageschritt-Kennungen (K(t)) vorhanden sind und dass vorzugsweise die Bauteile (11 bis 19) erst nach dem Eintreffen in den Montagesektoren (x1 bis x4) und unter Berücksichtigung der Montageschritt-Kennungen (K(t)) vor Ort dem Packmaterial entnommen werden.

8. Verfahren nach einem der vorangehenden Ansprüche, **gekennzeichnet durch** folgenden weiteren Schritt:
- Empfangen einer Bestellung für den spezifischen Aufzug (10), Fahrsteig oder Fahrtreppe über eine elektronische Rechnerschnittstelle, wobei der Eingang der Bestellung Information umfasst, die es einem Rechner ermöglicht die Bereitstellung der Teileliste und/oder der Montageinformation vorzunehmen.

9. Verfahren nach einem der vorangehenden Ansprüche, **dadurch gekennzeichnet, dass** es einen oder mehrere der folgenden Schritte umfasst:
- Bereitstellen der Teileliste und/oder der Montageinformation mittels eines Computers,
- Anzeigen der Teileliste und/oder der Montageinformation auf einem Bildschirm oder Ausdruck eines Computers.

10. Verfahren nach einem der vorangehenden Ansprüche,
**dadurch gekennzeichnet, dass** vor dem Abpacken folgende Schritte ausgeführt werden:
- Abrufen von Information zur optimierten Vormontage mindestens eines Teiles der Bauteile (11 bis 19),
- Vormontage dieses Teiles der Bauteile (11 bis 19),
wobei anschliessend beim Abpacken auch die vormontierten Bauteile (11 bis 19) abgepackt werden.

11. Verfahren nach einem der vorangehenden Ansprüche,
**dadurch gekennzeichnet, dass** beim Konsolidieren mittels eines Rechners überprüft wird, ob alle erforderlichen Bauteile (11 bis 19) verfügbar sind.

12. Verfahren nach einem der vorhergehenden Ansprüche,
**dadurch gekennzeichnet, dass** die Kennungen (K(x), K(t)) vorzugsweise sowohl durch eine Person als auch mit einem Lesegerät maschinenlesbar sind.

13. Liefereinheit (U) mit Bauteilen (11 bis 19) für einen Aufzug (10), einen Fahrsteig oder eine Fahrtreppe, wobei die Liefereinheit (U) eine Bezeichnung aufweist,
**dadurch gekennzeichnet, dass**
- die Liefereinheit (U) mehrere der Bauteile (11 bis 19) umfasst, die für einen bestimmten Montageschritt (t1 bis t5) erforderlich sind und/oder die in einem bestimmten Montagesektor (x1 bis x4) gebraucht werden,
- die Bezeichnung eine Sektions-Kennung (K(x)) mit Information über den Montagesektor (x1 bis x4) eines Installationsortes enthält, zu dem die Liefereinheit zu transportieren ist, und/oder eine Montageschritt-Kennung (K(t)) mit Information über den Montageschritt (t1 bis t4) umfasst, während welchem die Bauteile (11 bis 19) der Liefereinheit zu verwenden sind, um Montagepersonal zu ermöglichen, die Montageschritte (t1 bis t4) am Installationsort schrittweise auszuführen.

14. Liefereinheit (U) nach Anspruch 13, **dadurch gekennzeichnet, dass** mindestens ein Teil der Bauteile (11 bis 19) zu mindestens einer in der Liefereinheit (U) enthaltenen Montageeinheit oder einem Montagepaket abgepackt ist.

15. Liefereinheit (U) nach Anspruch 13 oder 14, **dadurch gekennzeichnet, dass** die Kennungen (K(x), K(t)) lesbar, vorzugsweise maschinenlesbar, sind, wobei vorzugsweise die Kennungen (K(x), K(t)) sowohl durch eine Person als auch mit einem Lesegerät maschinenlesbar sind.

16. Liefereinheit (U) nach einem der Ansprüche 13 bis 15, **dadurch gekennzeichnet, dass** die Kennungen (K(x), K(t)) durch Kleben, Schweissen, Drucken oder Einprägen an dem Packmaterial oder den Bauteilen (11 bis 19) der Liefereinheit (U) angebracht oder aufgebracht ist.

17. Liefereinheit (U) nach einem der Ansprüche 13 bis 16, **dadurch gekennzeichnet, dass** die Kennungen (K(x), K(t)) eine Referenz zu einer Montageanleitung umfassen, oder dass durch das Einlesen der Kennung mittels eines Lesegeräts Information zum anstehenden Montageschritt auf einem Bildschirm oder einem Ausdruck dargestellt wird.
